# EUROPÄISCHE PATENTANMELDUNG

(11) **EP 0 989 395 A2**
(43) Veröffentlichungstag der Anmeldung: **29.03.2000**
(21) Anmeldenummer: 99117213.1
(22) Anmeldetag: 01.09.1999
(51) Int. Cl.: G01L 9/06

(54) **Befestigungselement für mechanisch beanspruchte Halbleiterstrukturen sowie Halbleiterbauelement**

(30) Priorität: 24.09.1998 DE 19843882
(71) Anmelder: SIEMENS AKTIENGESELLSCHAFT, 80333 München (DE)
(72) Erfinder: Bever, Thomas, Dr., 81739 München (DE); Ehrler, Günter, 83607 Holzkirchen (DE); Schmitt, Stephan, 86916 Kaufering (DE)

(57) **Zusammenfassung**

Beschrieben ist ein Befestigungselement zur Befestigung von mechanisch beanspruchten Halbleiterstrukturen (8) auf einer Gehäuseträgerfläche (5), welches dadurch gekennzeichnet ist, daß das Befestigungselement eine obere Trägerchipebene (1), eine zweite Trägerchipebene (7), welche unmittelbar unterhalb der oberen Trägerchipebene angeordnet ist, und ggf. unterhalb der zweiten Trägerchipebene angeordnete weitere Trägerchipebenen aufweist, wobei mindestens zwei der enthaltenen Trägerchipebenen nicht vollflächig miteinander verbunden sind.

Die Erfindung betrifft ferner ein Halbleiterbauelement, welches ein Befestigungselement der vorstehend genannten Art enthält.

## Beschreibung

Die Erfindung betrifft ein Befestigungselement zur Befestigung von mechanisch beanspruchten Halbleiterstrukturen auf einer Gehäuseträgerfläche, sowie ein Halbleiterbauelement umfassend eine Halbleiterstruktur und eine Montagefläche.

Halbleiterstrukturen, wie beispielsweise mikromechanische Drucksensoren müssen in der Regel, bevor sie angewendet werden können, in ein geeignetes Gehäuse montiert werden. Eine Anordnung zur Befestigung von Drucksensoren an einer Gehäusegrundplatte ist aus Günter Ehrler, "Piezoresistive Silizium-Elementardrucksensoren", Sensormaganzin 1/1992, Seiten 10 bis 16, bekannt. Mikromechanische Halbleiterstrukturen, wie z. B. Drucksensoren, weisen überwiegend eine dünne Membranschicht aus einem Halbleitermaterial auf, deren Bewegung entweder mittels piezoresistiver Dehnungsmeßstreifen oder einer Kapazitätsmessung zwischen leitfähig gemachter Membran und einer Gegenelektrode erfolgt. Die Aufgrund des hohen Miniaturisierungsgrades sehr kleinen mikromechanischen Strukturen sind im allgemeinen empfindlich gegenüber während des Betriebs oder bereits während der Montage auftretende mechanische Verspannungen. Diese Empfindlichkeit kann zumindest teilweise durch eine optimierte Herstellung reduziert werden. Auf diese Weise lassen sich bei einem Sensorchip weitgehend verspannungsfreie Membranen herstellen. Eine besondere Rolle spielt auch die Montage der mikromechanischen Struktur auf die zur Aufnahme der Struktur vorgesehene Fläche des Gehäuses. Es werden in der Regel zusätzliche Montageanordnungen benötigt, die sich zwischen mikromechanischer Struktur und Gehäuse befinden. Die Anforderungen an eine solche Montageanordnung sind hoch, da einerseits die mikromechanische Struktur, wenn es sich um einen Drucksensors handelt, auf die von der Meßgröße induzierten mechanische Spannungen reagieren muß, andererseits jedoch keine Spannungen, welche die Kennlinie des Sensors verändern können, durch die Montage in die Struktur eingeprägt werden dürfen. Eine Änderung in der Kennlinie eines Drucksensors kann beispielsweise darin bestehen, daß die Kurve für das Ausgangssignal in Abhängigkeit vom angelegten Druck eine Hysterese aufweist. Für qualitativ hochwertige Meß-und Regelanordnungen sind daher Montageanordnungen notwendig, die eine sogenannte Härteverbindung des mikromechanischen Chips mit dem Gehäuse gewährleisten.

Eine Möglichkeit zur Verbindung eines mikromechanischen Drucksensors an die dafür vorgesehene Gehäusefläche besteht gemäß vorstehend genannter Publikation darin, daß der die Struktur enthaltende Chip im Waferverbund zunächst vor der Vereinzelung mit einem weiteren Wafer (Trägerwafer) verbunden wird. Das Material des Trägers ist bezüglich des thermischen Ausdehnungskoeffizienten an das Chipmaterial angepaßt. Als Trägermaterial läßt sich beispielsweise Silizium oder Pyrex-Glas einsetzen. Anschließend wird in den Trägerchip eine unterseitig angeordnete Ringnut eingearbeitet, die zu einer Reduktion der vom Träger zum Chip übertragenen mechanischen Spannungen führt. Am unteren Ende des Trägerchips ist ein Druckanschluß druckdicht und kraftschlüssig an den Trägerchip angeschlossen. Nach der Vereinzelung der aus Drucksensorchip und Trägerchip gebildeten Einheit und Montage des mit dem Trägerchip verbundenen Drucksensors auf den Druckanschluß entsteht ein Aufbau, der einem Podest ähnelt.

Wie bereits weiter oben erwähnt, wirken sich mechanische Spannungen nachteilig auf die Kennlinie der mikromechanischen Struktur aus. Neben thermischen Verspannungen, welche durch unterschiedliche Temperaturausdehnungskoeffizienten entstehen, ergeben sich auch mechanische Verspannungen aufgrund der Verklebung bzw. Verbindung von Einzelteilen des mikromechanischen Bauelements. Besonders schwierig lassen sich aushärtende Kleber handhaben; daher werden in der Regel niedrig schmelzende Lotverbindungen, wie z. B. Gold enthaltende Legierungen, als Verbindungsmaterial eingesetzt.

Die vorstehend beschriebene Anordnung zum stoff- und kraftschlüssigen Verbinden einer mikromechanischen Struktur mit einem Gehäuse läßt sich großtechnisch nicht ausreichend einfach herstellen. Ferner ergeben sich Probleme bei der Endmontage der auf dem Träger befestigten mikromechanischen Struktur. Wird beispielsweise ein Drucksensorchip durch Wirebonding mit externen Anschlüssen verbunden, so entstehen aufgrund der während des Bondvorgangs auftretenden Kraftstöße störende Chipvibrationen.

Aufgabe der vorliegenden Erfindung ist die Bereitstellung eines Befestigungselementes zur Befestigung von mechanisch beanspruchten Halbleiterstrukturen der vorstehend genannten Gattung, welches die vorstehend aufgeführten Nachteile von bekannten Befestigungselementen nicht aufweist.

Diese Aufgabe wird erfindungsgemäß gelöst durch ein Befestigungselement zur Befestigung von mechanisch beanspruchten Halbleiterstrukturen 8 auf einer Gehäuseträgerfläche 5, welches dadurch gekennzeichnet ist, daß das Befestigungselement eine obere Trägerchipebene (1), eine zweite Trägerchipebene (7), welche unmittelbar unterhalb der oberen Trägerchipebene angeordnet ist, und ggf. unterhalb der zweiten Tragerchipebene angeordnete weitere Trägerchipebenen aufweist, wobei mindestens zwei der enthaltenen Trägerchipebenen nicht vollflächig miteinander verbunden sind.

Vollflächig ist eine Verbindung im Sinne der Erfindung dann, wenn beispielweise bei zwei ebenen Platten die beim übereinanderlegen der Platten sich ergebende Auflagefläche vollständig miteinander mittels eines Klebstoffs verbunden ist. Eine nichtvollflächige Verbindung liegt dann vor, wenn die beiden Platten in Teilfächenbereichen der uberlappenden Flächen nicht miteinander verbunden sind, also sich z. B. an dieser Stelle kein Klebstoff befindet. Es kann aber auch sein, daß eine nicht vollflächige Verbindung durch Unebenheiten der Platten an deren Oberfläche entsteht. In diesem Fall ist die Platte zwar vollständig mit Klebstoff bedeckt, es handelt sich jedoch nicht um eine vollflächige Verbindung gemäß der Erfindung.

Die Anzahl der in der im Befestigungselementen enthaltenen Trägerchipebenen beträgt vorzugsweise 2, es ist jedoch denkbar, daß eine höhrere Anzahl, wie 3, 4 oder mehr, von Trägerchipebenen enthalten ist. Eine größere Anzahl von Trägerchipebenen führt in der Regel auch zu einer größeren Anzahl von Zwischenräumen 10, 11 und Verbindungsflächen 2, 3. Vorzugsweise ist dann jede weitere Trägerchipebene mit einer oberhalb der weiteren Trägerchipebene angeordneten Trägerchipebene nicht vollflächig verbunden.

Vorzugsweise ist zumindest die obere Trägerchipebene 1 nicht vollflächig mit der zweiten, unterhalb der oberen Trägerchipebene angeordneten, Trägerchipebene 7 verbunden.

Im erfindungsgemäßen Befestigungselement ist bevorzugt im überlappenden Flächenbereich von oberer Trägerchipebene 1 und zweiter Trägerchipebene 7 ein flächenförmiger Zwischenraum II 10 angeordnet, welcher eine Dicke im Bereich von etwa 0,1 bis 50 µm hat, wobei der Zwischenraum II bei mechanischen Verspannungen eine geringe Kippbewegung der oberen Trägerchipebene gegenüber der zweiten Trägerchipebene bzw. der zweiten Trägerchipebene gegenüber der oberen Trägerchipebene im Bereich des Zwischenraums II ermöglicht.

Mit dem erfindungsgemäßen Befestigungselement kann eine Halbleiterstruktur 8, welches beispielweise ein Drucksensor ist, mit einer Montagefläche 5 verbunden werden. Hierdurch entsteht ein fertiges Halbleiterbauelement, wie etwa ein eingehäuster Drucksensor.

Das Befestigungselement (1,7) weist somit vorzugsweise ein auf der Oberfläche der oberen Trägerchipebene aufgebrachtes Verbindungsmittel auf, welches im Bereich einer oberen Verbindungsfläche I 3 aufgebracht ist und
ein auf dessen Unterseite aufgebrachtes weiteres Verbindungsmittel, welches im Bereich einer Montageverbindungsfläche 4 aufgebracht ist. Die Anordnung und Größe der Verbindungsflächen 2,3,4 wird dabei auf die weiter unten beschriebene Weise vorgenommen. Es erfolgt zudem ggf. zusätzlich eine Einstellung des Biegemodul der enthaltenen Trägerchipebenen 1,7 beispielsweise durch Querschnittsveränderung der Trägerchipebenen. Die Anordnung der Verbindungsflächen und die Einstellung des Biegemoduls wird in der in diesem Absatz beschriebenen bevorzugten Ausführungsform so durchgeführt, daß bei Betrachtung eines Querschnitts durch das Befestigungselement, eine durchgängige kraftschlüssige Verbindung zwischen Halbleiterstruktur 8 und Montagefläche 5 entsteht. Eine gedachte Linie 13 im Querschnitt des Befestigungselements, welche von der Montagefläche zur Halbleiterstruktur entlang der besagten durchgängigen kraftschlüssigen Verbindung verläuft, hat dann einen S-förmig gekrümmten Verlauf.

Als Verbindungsmittel lassen sich ganz allgemein an sich bekannte Klebstoffe, Schmelzkleber oder Lote einsetzen. Vorzugsweise handelt es sich bei den Verbindungsmitteln um Lote, wie beispielsweise AuSn oder AuSi.

Im oben beschriebenen Befestigungselement mit den aufgebrachten Verbindungsmitteln sind bevorzugt die Verbindungsfläche I 3, die Verbindungsfläche II 2, die Montageverbindungsfläche 4 und vorzugsweise auch jede weitere ggf. vorhandene Verbindungsfläche im Querschnitt des Befestigungselements betrachtet zueinander abwechselnd versetzt angeordnet. Es handelt sich dann um eine S-förmige oder zickzackförmige Anordnung aus der Sicht auf eine Querschnittsfläche, welche senkrecht zur Oberfläche der Halbleiterstruktur und durch den Mittelpunkt der Medienöffnung 16 verläuft.

Die Verringerung des Biegemoduls der Trägerchipebenen 1,7 wird vorzugsweise dadurch erreicht, daß eine oder mehrere Ausdünnungen 9 eingearbeitet sind. Hierdurch wird eine Kippbewegung der Trägerchipebenen erleichtert, was mit einer Verstärkung der Federwirkung des Befestigungselement einhergeht.

Unter einer Kippbewegung wird erfindungsgemäß verstanden, daß im Bereich eines Zwischenraums sich die obere und/oder untere Ebene verformen bzw. verbiegen kann. Die Größe der Kippbewegung ist abhängig von einer auf die Ebene wirkenden Kraft, von der Lange des Hebelarms zwischen Kraft und Befestigungspunkt (-fläche) und Dimension der Ebenen. Bei der Kippbewegung verringert oder vergrößert sich der Abstand der Ebenen im Bereich der Zwischenräume, welche benachbart zu den Befestigungspunkten (-flächen) angeordnet sind.

Die Erfindung betrifft auch ein Halbleiterbauelement umfassend eine Halbleiterstruktur 8 und eine Montagefläche 5, welches dadurch gekennzeichnet ist, daß die Halbleiterstruktur mittels eines vorstehend beschriebenen erfindungsgemäßen Befestigungselementes 1,7 mit der Montagefläche verbunden ist.

Unter einem Halbleiterbauelement wird beispielsweise ein fertiger Drucksensor verstanden, der einen in ein Gehäuse eingebauten Halbleiterdrucksensor enthält.

Der Temperaturausdehnungskoeffizient der im Befestigungselement enthaltenen Ebenen 1,7 wird zweckmäßigerweise so gewählt, daß dieser im wesentlichen mit dem Temperaturausdehnungskoeffizienten der Halbleiterstruktur übereinstimmt. Die enthaltenen Ebenen bestehen beispielsweise aus Pyrex-Glas oder Silizium. Ganz besonders bevorzugt wird für die Ebenen Silizium eingesetzt.

Vorzugsweise sind die erfindungsgemäßen Halbleiterstrukturen mikromechanische Halbleiterbauelemente. Darunter sind Halbleiterbauelemente zu verstehen, die mindestens eine mikromechanische Struktur, wie etwa ein Drucksensorelement, einen Beschleunigungssensor, einen Kraftsensor oder dergleichen, enthalten. Besonders bevorzugt handelt es sich bei den erfindungsgemäßen Halbleiterstrukturen um mikromechanische Drucksensoren.

Weitere bevorzugte Ausführungsformen ergeben sich aus den Unteransprüchen.

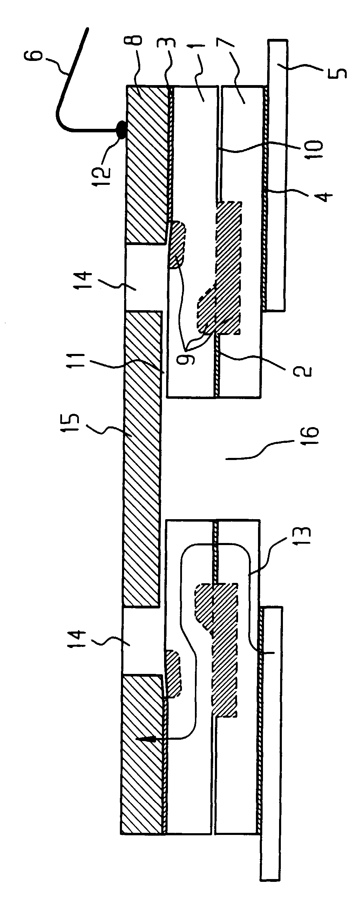

Es zeigt
- Figur 1: in schematischer Darstellung einen Querschnitt durch eine auf einem Gehäuse 5 bzw. Träger montierte Halbleiterstruktur.

Gemäß Ausführungsbeispiel in Figur 1 ist ein Chip umfassend einen mikromechanischen Drucksensors 8 mit einem Träger umfassend die Ebenen 1 und 7 verbunden. Der Träger ist mit einem herkömmlichen organischen Kleber mit dem Montageelement 5 des Gehäuses, welches z.B. eine ebene Metallplatte sein kann, verbunden. Die Membran 14 ist ringförmig in die Ebene des Drucksensorwafers 8 einstrukturiert. In Mitten der kreisförmigen Membranfläche befindet sich eine im Vergleich zur Dicke der Membran wesentlich dickere Mittelinsel 15, welche den Träger nicht berührt. Die nicht dargestellten Elemente zur Messung der Membranposition, wie Piezoelemente oder Kondensatoranorelektroden sind über Verbindungspunkte 12 mit elektrischen Zuleitungen 6 verbunden. Das Druckmedium kann von der Unterseite über die Medienöffnung 16 an die Membran auch durch Krafteinwirkung auf die Mittelinsel 15 herantreten. Hierzu sind im Montageelement 5, in der unteren Trägerchipebene 7 und in der oberen Trägerchipebene 1 Löcher, beispielsweise in Form von Kreisen, eingearbeitet. Der Sensorchip 8 liegt auf einer umlaufenden Verbindungsfläche I auf der oberen Trägerchipebene 1 auf. Die Verbindungsfläche I hat die Form einer Scheibe mit einem in der Scheibe mittig zentriert angeordneten Loch mit großem Durchmesser. Im Bereich der Verbindungsfläche I (Bezugszeichen 3) ist der Sensorchip mit einem AuSi-Lot verbunden. Das Lot geht bei einer Temperatur von etwa 400°C gemeinsam mit dem Silizium des Sensorchips und der ersten Trägerchipebene eine eutektische Verbindung ein.

Der Innendurchmesser der besagten Öffnung in Verbindungsfläche I 3 beträgt beispielsweise 6000 µm. Der Innendurchmesser dieser Öffnung ist zweckmäßigerweise größer als der Durchmesser der Medienöffnung 16, so daß zwischen Sensorchip 8 und oberer Trägerchipebene 1 ein Zwischenraum I 11 verbleibt, welcher vorzugsweise eine Dicke von 20 bis 70 µm hat. Zwischen oberer Trägerchipebene 1 und Montageelement 5 befindet sich eine weitere untere Trägerchipebene, beispielsweise aus einem zusätzlichen Siliziumwafer, welcher vor der Vereinzelung mit dem darüber liegenden Aufbau mit einem AuSn-Lot verbunden wird. Diese als Verbindungsfläche II 2 bezeichnete, beispielsweise kreisringförmige, Fläche weist einen Innendurchmesser auf, welcher dem Durchmesser der Medienöffnung 16 entspricht. Der Außendurchmesser ist wesentlich kleiner als der Durchmesser des gesamten Sensorelements nach der Vereinzelung. Hierdurch entsteht im Außenbereich zwischen oberer Trägerchipebene 1 und unterer Trägerchipebene 7 ein weiterer Zwischenraum II 10 mit einer Dicke von vorzugsweise 0,1 bis 50 µm. Die vorstehend genannte Schichtfolge aus Elementarwafer 8, oberer Trägerchipebene 1 und unterer Trägerchipebene 7 wird nun mit dem Montageelement 5 auf an sich bekannte Weise mit einem herkömmlichen Kleber verbunden. Die Montagefläche 4 entspricht dem gesamten von der unteren Trägerchipebene überlappten Bereich des Montageelements 5. Die Ausnehmung des Montageelements 5 im Bereich der Medienöffnung 16 kann zweckmäßigerweise größeren Durchmessers sein, als der Durchmesser der oberen und unteren Trägerchipebenen. Hierdurch wird die Einhaltung einer korrekten, positionstreuen Montage erleichtert. Wie anhand des in Form eines Pfeils dargestellten Befestigungsverlaufs 13 erkennbar wird, ergibt sich bei der vorstehend beschriebenen Konstruktion eine durchgängige, kraftschlüssige Verbindung des Sensorchips mit dem Montageelement, wobei die Verbindung einen S-förmigen Verlauf hat. Hierdurch entsteht eine Federwirkung, welche vergleichbar mit der Federwirkung einer Spiralfeder ist. Der S-förmige Verlauf ergibt sich durch eine in der in Fig. 1 dargestellten Schnittebene seitlich versetzte Positionierung von Zwischenraums I 11 gegenüber Zwischenraums II 10.

In Ausführungsbeispiel gemäß Figur 1 sind auf den Flächen der Trägerchipebenen 1 und 7 Ausdünnungen 9 eingearbeitet. Diese Ausdünnungen führen zu einer Reduktion des Querschnitts der Trägerchipebenen 1,7. Wenn es zweckmäßig ist, läßt sich mit Hilfe dieser Ausdünnungen eine größere Nachgiebigkeit des Trägers, vergleichbar mit einer niedrigeren Federkonstante einer Spiralfeder, erzielen.

In der nachfolgenden Tabelle sind Beispiele für besonders bevorzugte Kombinationen von Verbindungensmethoden angegeben.

| Montagefläche | Verbindungsfl. II | Verbindungsfl. I |
|---|---|---|
| üblicher Klebstoff | AuSi-Lot | AuSn-Lot |
| üblicher Klebstoff | Anodisches Bonden (Anodic Bonding) | AuSn-Lot |
| üblicher Klebstoff | Verschmelzen (Fusion Bonding) | AuSi-Lot |
| üblicher Klebstoff | Verschmelzen | AuSn-Lot |
| üblicher Klebstoff | AuSn-Lot | AuSi-Lot |

Die Aushärtungstemperaturen ergeben sich aus der nachfolgenden Tabelle:

| Verbindungsmethode | Verbindungstemperatur |
|---|---|
| üblicher Klebstoff | ≤ 200 °C |
| AuSi-Lot | ca. 400 °C |
| AuSn-Lot | ca. 300 °C |
| Anodisches Bonden | ca. 400 °C |
| Verschmelzen | ca. 900 °C |

Bei der Herstellung des Halbleiterbauelements muß darauf geachtet werden, daß bei einem Herstellungsschritt zur Verbindung zweier Ebenen nicht zuvor hergestellte Verbindungen durch eine höhere Temperatur der zweiten Verbindung wieder gelöst werden.

Ein Vorteil des erfindungsgemäßen Befestigungselementes ist es, daß mikromechanische Strukturen auf besonders einfache Weise mit einem Gehäuse verbunden werden können, wobei ein ausreichender Schutz gegenüber mechanischen Spannungen besteht. Gegenüber bekannten Chipträgern ist keine Einzelmontage nötig, da alle Herstellungsschritte vor der Vereinzelung vorgenommen werden können. Ein weiterer Vorteil ist es, daß die Verbindungsfläche zwischen Befestigungselement und Gehäuse größer ist, als bei bekannten Anordnungen.

Vorteilhafterweise entstehen bei einer Befestigung von Halbleiterstrukturen mit dem erfindungsgemäßen Befestigungselement keine Probleme hinsichtlich der Befestigung von Anschlußdrähten, z. B. beim Wire-Bonden. Im Gegensatz zu bekannten Anordnungen ist unterhalb der Befestigungspunkte für die elektrischen Zuleitungen ein weitaus geringerer Zwischenraum vorhanden.

## Patentansprüche

1. Befestigungselement zur Befestigung von mechanisch beanspruchten Halbleiterstrukturen (8) auf einer Gehäuseträgerfläche (5),
**dadurch gekennzeichnet,**
daß das Befestigungselement eine obere Trägerchipebene (1), eine zweite Trägerchipebene (7), welche unmittelbar unterhalb der oberen Trägerchipebene angeordnet ist, und ggf. unterhalb der zweiten Trägerchipebene angeordnete weitere Trägerchipebenen aufweist, wobei mindestens zwei der enthaltenen Trägerchipebenen nicht vollflächig miteinander verbunden sind, daß das Befestigungselement (1,7) ein auf der Oberfläche der oberen Trägerchipebene aufgebrachtes Verbindungsmittel aufweist, welches im Bereich einer oberen Verbindungsfläche I (3) aufgebracht ist,
daß das Befestigungselement ein auf dessen Unterseite aufgebrachtes weiteres Verbindungsmittel aufweist, welches im Bereich einer Montageverbindungsfläche (4) aufgebracht ist, und
daß die Verbindungsfläche I (3), die Verbindungsfläche II (2) und die Montageverbindungsfläche (4) im Querschnitt des Befestigungselements betrachtet zueinander abwechselnd versetzt angeordnet sind.

2. Befestigungselement gemäß Anspruch 1,
**dadurch gekennzeichnet,** daß jede weitere Trägerchipebene mit einer oberhalb der weiteren Trägerchipebene angeordneten Trägerchipebene nicht vollflächig verbunden ist.

3. Befestigungselement nach Anspruch 1 oder 2,
**dadurch gekennzeichnet,**
daß im überlappenden Flächenbereich von oberer Tragerchipebene (1) und zweiter Trägerchipebene (7) ein flächenförmiger Zwischenraum II (10) angeordnet ist, welcher eine Dicke im Bereich von etwa 0,1 bis 50 µm hat, wobei der Zwischenraum II bei mechanischen Verspannungen eine geringe Kippbewegung der oberen Trägerchipebene gegenüber der zweiten Trägerchipebene bzw. der zweiten Trägerchipebene gegenüber der oberen Trägerchipebene im Bereich des Zwischenraums II ermöglicht.

4. Befestigungselement nach mindestens einem der Ansprüche 1 bis 3,
**dadurch gekennzeichnet,**
daß bei Betrachtung eines Querschnitts durch das Befestigungselement die Anordnung und Größe der Verbindungsflachen (2,3,4) und/oder das Biegemodul der enthaltenen Trägerchipebenen (1,7) so gewählt wird, daß
eine durchgängige kraftschlüssige Verbindung zwischen Halbleiterstruktur (8) und Mantagefläche (5) entsteht, wobei eine gedachte Linie (13) im Querschnitt des Befestigungselements, welche von der Montagefläche zur Halbleiterstruktur entlang der besagten durchgängigen kraftschlüssigen Verbindung verläuft, einen S-förmig gekrümmten Verlauf hat.

5. Befestigungselement nach Anspruch 4,
**dadurch gekennzeichnet,**
daß in den Trägerchipebenen (1,7) eine oder mehrere Ausdünnungen (9) eingearbeitet sind, die das Biegemodul der Trägerchipebenen verringern und somit eine Kippbewegung der Trägerchipebenen erleichtern.

6. Halbleiterbauelement umfassend eine Halbleiterstruktur (8) und eine Montagefläche (5),
**dadurch gekennzeichnet,**
daß die Halbleiterstruktur mittels eines Befestigungselements (1,7) gemäß Anspruch 1 mit der Montagefläche verbunden ist.

7. Halbleiterbauelement nach Anspruch 6,
**dadurch gekennzeichnet,**
daß die Halbleiterstruktur (8) nicht vollflächig mit der obersten Ebene des Befestigungselements (1) verbunden ist.

8. Halbleiterbauelement nach Anspruch 6 oder 7,
**dadurch gekennzeichnet,**
daß das Befestigungselement (1,7) mit der Montagefläche (5) vollflächig verbunden ist.

9. Halbleiterbauelement nach mindestens einem der Ansprüche 6 bis 8,
**dadurch gekennzeichnet,**
daß im überlappenden Flächenbereich von Halbleiterstruktur und Befestigungselement ein flächenförmiger Zwischenraum I (11) angeordnet ist, welcher eine Dicke im Bereich von etwa 10 bis 50 µm hat, wobei der Zwischenraum I bei mechanischen Verspannungen eine geringe Kippbewegung der Halbleiterstruktur gegenüber dem Befestigungselement bzw. zwischen dem Befestigungselement und der Halbleiterstruktur im Bereich des Zwischenraums I ermöglicht.

10. Halbleiterbauelement nach mindestens einem der Ansprüche 6 bis 9,
**dadurch gekennzeichnet,**
daß bei Betrachtung eines Querschnitts durch das Halbleiterbauelement die Anordnung und Größe der enthaltenen Verbindungsflächen (2,3,4), der Zwischenräume (10,11) und/oder das Biegemodul der enthaltenen Trägerchipebenen (1,7) so gewählt wird, daß
eine durchgängige kraftschlüssige Verbindung zwischen Halbleiterstruktur und Mantagefläche entsteht, wobei eine gedachte Linie (13) im Querschnitt, welche von der Montagefläche zur Halbleiterstruktur entlang der besagten durchgängigen kraftschlüssigen Verbindung verläuft, einen S-förmig gekrümmten Verlauf hat.

11. Halbleiterbauelement nach Anspruch 10,
**dadurch gekennzeichnet,**
daß die Verbindungsfläche I (3), die Verbindungsfläche II (2) und die Montageverbindungsfläche (4) im Querschnitt betrachtet zueinander abwechselnd versetzt angeordnet sind.

12. Halbleiterbauelement nach Anspruch 10,
**dadurch gekennzeichnet,**
daß der Zwischenraum I (11) und der Zwischenraum II (10) im Querschnitt des Halbleiterbauelements betrachtet seitlich voneinander abwechselnd versetzt angeordnet sind.
